# EUROPEAN PATENT SPECIFICATION

(11) **EP 0 683 328 B1**
(45) Date of publication and mention of the grant of the patent: **20.02.2002**
(21) Application number: 95901602.3
(22) Date of filing: 29.11.1994
(51) Int. Cl.: F16C 3/02

(54) **PROPELLER SHAFT**
ANTRIEBSWELLE
ARBRE DE TRANSMISSION

(30) Priority: 30.11.1993 JP 30031293; 30.11.1993 JP 30031393
(43) Date of publication of application: 22.11.1995
(73) Proprietor: TORAY INDUSTRIES, INC., Tokyo 103-8666 (JP)
(72) Inventor: KIMOTO, Yukitane, Ehime-ken 790-01 (JP); TOYODA, Yasuyuki, Ehime-ken 790 (JP); OCHI, Yutaka, Iyo-gun, Ehime-ken 791-31 (JP)
(74) Representative: Coleiro, Raymond
(86) International application number: JP9401996
(87) International publication number: WO9515444

(56) References cited:
- JP-A- 3 048 023
- JP-B- 60 041 246
- Microfilm of the Specification and Drawings Annexed to the Written Application of Japanese Utility Model Application No. 91118/1987 (Laid-Open No. 91118/1989) (Nissan Motor Co., Ltd.), June 15, 1989 (15.06.89), lines 10 to 13, page 3, lines 9 to 13, page 7.

## Description

This invention relates to a propeller shaft according to the preamble of claim 1 (drive shaft) for automobiles and the like.

### Background Art

Nowadays, there is a great demand for weight reduction in automobiles from the viewpoint of fuel economy, environmental protection, etc. As a means for achieving this, use of propeller shafts formed of FRP (fiber-reinforced plastics) are being considered, and some of them have already been put into practical use. Such an FRP propeller shaft has a cylindrical main body that is made of FRP, and metal joints that are joined to the ends of this main body.

An automobile propeller shaft, which serves to transmit torque generated in the engine to driving wheels, is required to have a torsional strength of approximately 100~400 kgf.m. Further, it is also required to have a critical revolution of approximately 5,000 to 15,000 rpm in order that resonance may be avoided in high-speed rotation. To satisfy these fundamental requirements, various parameters, such as the kind, quantity and orientation of reinforcing fibers, the layered structure, the outer and inner diameters, and the wall thickness, are taken into consideration when designing the main body, which is made of FRP.

For example, in determining the orientation of the reinforcing fibers, the following facts are to be taken into account: mainly from the viewpoint of torsional strength, the reinforcing fibers are most effectively arranged at an angle of ± 45° with respect to the axial dimension of the main body. Mainly from the viewpoint of torsional buckling strength, the most effective angle of arrangement for the reinforcing fibers is ±80~ 90° with respect to the axial dimension of the main body. Mainly from the viewpoint of critical revolution, the reinforcing fibers are to be arranged in a direction as close as possible to the axial direction in order to achieve an increase in bending elasticity modulus to thereby obtain a high bending resonance frequency.

Thus, the most effective orientation for the reinforcing depends upon the fundamental requirement to be taken into consideration, such as torsional strength or critical revolution, which means the layer structure has to be determined by appropriately combining orientations that are most suitable from the viewpoint of the actual requirements. The torsional strength can also be dealt with in terms of dimensions, such as outer diameter and wall thickness, so that, when designing a propeller shaft, first priority is usually given to the critical revolution, which greatly depends upon the orientation of the reinforcing fibers, and the proportion of those layers in which the reinforcing fibers are arranged at a small angle with respect to the axis of the shaft is made relatively large. This, however, entails the following problems:

The assurance of safety for the passengers when a collision occurs is an issue no less important than weight reduction. The prevailing present-day idea in automobile design regarding safety assurance consists in a crashable body structure, in which the impact energy (compressive load) at the time of collision is absorbed by the compressive destruction of the body, thereby mitigating the rapid acceleration applied to the passengers. It should be noted, however, that, if the body of the FRP propeller shaft is designed in conformity with the above idea, which gives priority to critical revolution, the strength of the body with respect to an axial compressive load must inevitably increase. This leads to a deterioration in the impact energy absorbing effect. Thus, when the body suffers rupture as a result of a collision and the rupture proceeds to reach the propeller shaft, the propeller shaft will act as a kind of prop.

As a means for solving this problem, Japanese Patent Laid-Open No. 3-37416 and DE-A-3 920 793 propose a propeller shaft as according to the preamble of claim 1 in which the joints are allowed to move axially along the joint surfaces between the main body and these joints, and, in this process, the joints force the main body to gradually enlarge until its rupture, starting from the ends thereof, thereby breaking the propeller shaft. However, in this conventional propeller shaft, it is necessary for the main body and the joints to be joined together through the intermediation of teeth of a complicated shape, a separating agent, etc., in order to secure the movement of the joints, resulting in a rather complicated structure. Furthermore, a complicated production process is not avoided. Moreover, when, in a propeller shaft having such a construction, joints are to be joined by press fitting, the main body must be strong enough to withstand the force applied in the press fitting process. However, imparting such a high strength to the main body makes it difficult for the main body to be enlarged and broken by the compressive load. Thus, it is quite difficult simultaneously to satisfy the above-mentioned fundamental requirements and the requirements regarding enlargement and rupture, which are contradictory to each other.

Japanese Patent Laid-Open No. 4-339022 discloses a propeller shaft in which, when an axial compressive load is applied, the joints are caused to move along the joint surfaces between the main body and these joints toward the interior of the main body, whereby the impact energy is absorbed by the movement resistance. However, in such a construction, it is absolutely necessary for the outer diameter of the joints to be smaller than the inner diameter of the main body, resulting in a reduction in the degree of freedom in designing. Furthermore, the amount of movement is limited to the length of the joints, so that the effect of absorbing the impact energy is not so great.

Thus, the conventional propeller shafts can not be regarded as well balanced in terms of fundamental requirements regarding torsional strength, critical revolution, etc. and safety assurance for the passengers at the time of a collision.

### Disclosure of the Invention

It is an object of this invention to provide a propeller shaft in which the above problems in the conventional propeller shafts have been solved and which, when the automobile undergoes a crash, reliably causes rupture to proceed in the propeller shaft with the breakage of the car body, thereby making it possible for the energy absorbing effect of the car body to be fully exerted.

To achieve the above object, there is provided, in accordance with the present invention, a propeller shaft according to the preamble of claim 1 which is characterised by the features of the characterising portion of claim 1.

In preferred embodiments of this invention, there is further provided a second joint made of metal that is joined to the other end of this main body, the main body including a second sub-layer formed at the other end of the main body so as to be integral with and internally of the main layer, the second joint being equipped with a compressive load transmitting section adapted to concentrate a compressive load axially acting in the axial direction of the second joint on an interface between the main layer and the second sub-layer to thereby separate the main layer and the second sub-layers from each other at this interface, wherein the second joint comprises a serration on a surface of said second joint extending in an axial direction thereof and wherein a junction between said second joint and said second sub-layer is effected by press-fitting .

In a further preferred embodiment there is provided a propeller shaft comprising a cylindrical main body made of FRP and joints that are joined to one and the other end of this main body, the main body including a main layer extending over the entire length thereof and including helically wound reinforcing fibers, and sub-layers formed at one and the other end of the main body so as to be integral with and internally of the main layer and including hooped reinforcing fibers, the joints provided at one and the other end each being equipped with a compressive load transmitting section adapted to concentrate a compressive load acting in the axial direction of the joint on the interface between the main layer and the sub-layer to thereby separate the main layer and the sub-layer from each other at this interface.

In another preferred embodiment of this invention, there is provided a propeller shaft comprising a cylindrical main body made of FRP and joints that are respectively joined to one and the other end of this main body, the main body including a main layer extending over the entire length thereof and including reinforcing fibers helically wound at an angle of ±5~30° with respect to the axial dimension of the main body, and sub-layers formed at one and the other end of the main body so as to be integral with and situated internally of the main layer and including hooped reinforcing fibers, the joints provided at one and the other end of the main body being each equipped with a compressive load transmitting section adapted to concentrate a compressive load acting in the axial direction of the joint on the interface between the main layer and the sub-layer to thereby separate the main layer and the sub-layer from each other at this interface.

In the above constructions, it is desirable for the compressive load transmitting section to have a slope descending toward the joint surface between the joint and the main body or an erect surface having an outer diameter not larger than the outer diameter of the sub-layer and opposed to the outer end surface of the sub-layer. When the erect surface construction is adopted, it is possible for the erect surface to be continuous in the circumferential direction of the joint or divided into a plurality of parts. In the case of the former structure, it would be desirable to partially beveled the outer end surface of the main body.

In a further embodiment of this invention there is provided a propeller shaft comprising a cylindrical main body made of FRP and metal joints that are joined to one and the other end of this main body, the main body including:
a. a main layer provided to extend over the entire length of the main body and including reinforcing fibers helically wound at an angle of ±5~30° with respect to the axial dimension of the main body; and
b. sub-layers formed at one and the other end of the main body so as to be integral with and internally of the main layer and including hooped reinforcing fibers,
   the joints provided at one and the other end of the main body including:
c. joint surfaces in contact with the inner periphery of the sub-layers; and
d. compressive load transmitting sections provided adjacent to the joint surfaces, each adapted to concentrate a compressive load acting in the axial direction of the joints on the interface between the main layer and the sub-layer to thereby separate the main layer and the sub-layer from each other at this interface, and each having a slope descending toward the joint surface.

In another preferred embodiment of this invention, there is provided a propeller shaft comprising a cylindrical main body made of FRP and metal joints that are joined to one and the other end of this main body, the main body including:
a. a main layer provided to extend over the entire length of the main body and including reinforcing fibers helically wound at an angle of ±5~30° with respect to the axial dimension of the main body; and
b. sub-layers formed at one and the other end of the main body so as to be integral with and internally of the main layer and including hooped reinforcing fibers,
   the joints provided at one and the other end of the main body including:
c. joint surfaces in contact with the inner periphery of the sub-layers; and
d. compressive load transmitting sections provided adjacent to the joint surfaces, each adapted to concentrate a compressive load acting in the axial direction of the joints on the interface between the main layer and the sub-layer to thereby separate the main layer and the sub-layer from each other at this interface, and having erect surfaces having an outer diameter that is not larger than the outer diameter of the sub-layers and opposed to the outer end surfaces of the sub-layers. In this case also, the erect surfaces may extend in a ring-like fashion in the circumferential direction of the joints, or a plurality of erect surfaces may be arranged circumferentially. In the former case, it is desirable for the outer end surfaces of the main body be partially beveled beforehand.

Another preferred embodiment of this invention provides a propeller shaft comprising a cylindrical main body made of FRP and a joint that is joined to an end of this main body, the main body including a main layer extending over the entire length thereof and a sub-layer formed at the end of the main body so as to be integral with and situated internally of the main layer, the joint being equipped with wedge means for causing a compressive load acting in the axial direction of the joint to act on the interface between the main layer and the sub-layer to thereby separate the main layer and the sub-layer from each other.

In a further embodiment there is provided a propeller shaft comprising a cylindrical main body made of FRP and joints that are joined to one and the other end of this main body, the main body including a main layer extending over the entire length thereof and a sub-layer formed at one end of the main body so as to be integral with and internally of the main layer, the joint provided at the above-mentioned one end being equipped with wedge means for causing a compressive load acting in the axial direction of the joint to act on the interface between the main layer and the sub-layer to thereby separate the main layer and the sub-layer from each other.

Another preferred embodiment provides a propeller shaft comprising a cylindrical main body made of FRP and joints that are joined to one and the other end of the main body, the main body including a main layer extending over the entire length thereof and including reinforcing fibers helically wound and sub-layers formed at one and the other end of the main body so as to be integral with and internally of the main layer and including hooped reinforcing fibers, the joints provided at one and the other end mentioned above being equipped with wedge means adapted to cause a compressive load acting in the axial direction of the joints to act on the interface between the main layer and the sub-layers to thereby separate the main layer and the sub-layer from each other.

In another preferred embodiment of this invention there is provided a propeller shaft comprising a cylindrical main body made of FRP and joints that are joined to one and the other end of the main body, the main body including a main layer extending over the entire length thereof and including reinforcing fibers helically wound at an angle of ± 5~ 30° with respect to the axial dimension of the main body, and sub-layers formed at one and the other end of the main body so as to be integral with and internally of the main layer and including hooped reinforcing fibers, the joints provided at one and the other end mentioned above being equipped with wedge means adapted to cause a compressive load acting in the axial direction of the joints to act on the interface between the main layer and the sub-layers to thereby separate the main layer and the sub-layer from each other.

In another preferred embodiment there is provided a propeller shaft comprising a cylindrical main body made of FRP and metal joints that are joined to one and the other end of this main body, the main body including:
a. a main layer provided to extend over the entire length of the main body and including reinforcing fibers helically wound at an angle of ±5~30° with respect to the axial dimension of the main body; and
b. sub-layers formed at one and the other end of the main body so as to be integral with and internally of the main layer and including hooped reinforcing fibers,
   the joints provided at one and the other end of the main body including:
c. joint surfaces in contact with the inner periphery of the sub-layers; and
d. wedge means provided adjacent to the joint surfaces, each adapted to concentrate a compressive load acting in the axial direction of the joints on the interface between the main layer and the sub-layer to thereby separate the main layer and the sub-layer from each other at this interface, and having forward ends opposed to the interface between the main layer and the sub-layers.

The above-mentioned wedge means has a ring-like wedge extending along the interface between the main layer and the sub-layer, or a plurality of wedges arranged along the interface.

In the above constructions, the junction between the main body and the joints is effected by press fitting. The joints to have a serration extending in the axial direction thereof on the joint surface between the joints and the main body. Further, it is desirable for the main body to contain a damper.

### Brief Description of the Drawings

Fig. 1 is a schematic front view, partly in longitudinal section, showing the essential part of a propeller shaft according to an embodiment of the present invention;
Fig. 2 is a schematic front view, partly in longitudinal section, showing a joint used in the propeller shaft shown in Fig. 1;
Fig. 3 is a schematic front view, partly in longitudinal section, of the essential part of the propeller shaft shown in Fig. 1, showing how rupture proceeds in the propeller shaft;
Fig. 4 is a schematic front view, partly in longitudinal section, showing the essential part of a propeller shaft according to another embodiment of the present invention;
Fig. 5 is a schematic front view, partly in longitudinal section, of the essential part of the propeller shaft shown in Fig. 4, showing how rupture proceeds in the propeller shaft;
Fig. 6 is a schematic slightly perspective view showing the essential part of a propeller shaft having a joint different from that shown in Fig. 2;
Fig. 7 is a schematic slightly perspective front view showing the essential part of a propeller shaft having a main body configuration different from that shown in Fig. 4;
Fig. 8 is a schematic front view, partly in longitudinal section, showing the essential part of a propeller shaft according to still another embodiment of the present invention;
Fig. 9 is a schematic front view, partly in longitudinal section, showing a joint used in the propeller shaft shown in Fig. 8;
Fig. 10 is a schematic front view, partly in longitudinal section, of the essential part of the propeller shaft shown in Fig. 8, showing how rupture proceeds in the propeller shaft;
Fig. 11 is a schematic front view, partly in longitudinal section, of a non-broken end part of a propeller shaft according to an embodiment of the joint that is joined to the non-broken end of the propeller shaft which is as such not covered by claim 1.
Fig. 12 is a schematic front view, partly in longitudinal section, of the essential part of a main body having a sub-layer of a different configuration;
Fig. 13 is a schematic cross sectional view of the essential part of a damper used in the propeller shaft of this invention;
Fig. 14 is a schematic side view showing the overall configuration of the damper shown in Fig. 13; and
Fig. 15 is a schematic cross sectional view showing the essential part of a damper that is different from that shown in Fig. 13.

### Best Mode for Carrying out the Invention

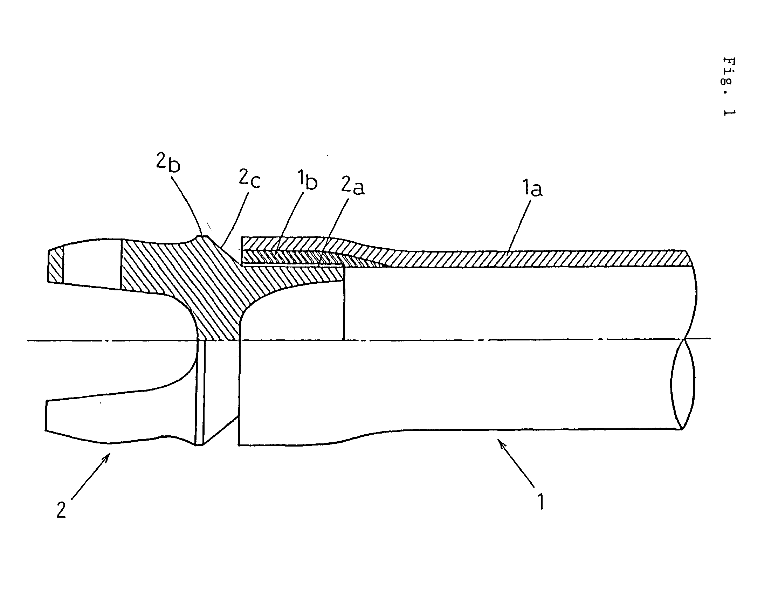

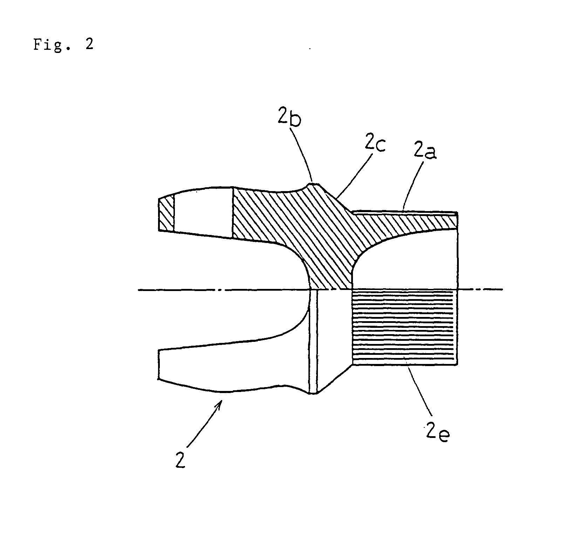

This invention will now be described in more detail with reference to an embodiment thereof. Figs. 1 and 2 show a propeller shaft having a cylindrical main body 1 formed of FRP, which is obtained by reinforcing a thermosetting resin, such as epoxy resin, unsaturated polyester resin, phenol resin, vinyl ester resin or polyimide resin, or a thermoplastic resin, such as polyamide resin, polycarbonate resin, or polyether imide resin, by means of reinforcing fibers of high strength and high elastic modulus, such as carbon fibers, glass fibers, or polyaramid fibers. Metal joints 2 are joined to one and the other end of the main body 1 by press fitting. This propeller shaft is symmetrical about the midpoint thereof with respect to the longitudinal direction.

The main body 1 has a main layer 1a having a uniform inner diameter, extending over the entire length thereof, and including reinforcing fibers helically wound at an angle of ±5~30° with respect to the axial dimension, and sub-layers (layers in which reinforcing fibers are arranged at an angle of ±80~90° with respect to the axial dimension) 1b formed at the ends of the main body 1 so as to be integral with and internally of the main layer 1a and including hooped reinforcing fibers. The main layer 1a mainly serves to improve the bending elastic modulus in the axial direction of the main body 1 to thereby enhance the flexural resonance frequency, critical revolution, and torsional strength of the propeller shaft. The sub-layers 1b mainly serve to impart to the ends of the main body 1, to which the joints are joined by press fitting, a strength large enough to withstand the force applied at the time of press fitting without preventing the progress of rupture as described below, and transmit the torque (torsional torque) from the joints 2 to the main body 1. The main body 1 can be formed, for example, by the filament winding method.

That is, a bundle of reinforcing fibers impregnated with resin is hooped around one end of a mandrel to form a sub-layer to a desired thickness and in a desired length, and then the bundle of reinforcing fibers impregnated with resin is passed as it is to the other end of the mandrel to form a sub-layer at the other end in a similar manner. Subsequently, a bundle of fibers impregnated with resin is helically wound while reciprocating the bundle of layers impregnated with resin between one and the other end to thereby form a main layer having a desired thickness. When the formation of the main layer has been completed, it is possible to hoop one layer of a bundle of fibers impregnated with resin around the main layer, whereby surplus resin is squeezed out to increase the volume content of the reinforcing fibers, thereby further improving various kinds of strengths, elastic modulus, etc. of the main body. In this way, it is possible to form the layers continuously without cutting the bundle of reinforcing fibers in mid course. After the formation of the layers, the resin is cured or solidified, preferably rotating them the while. Then, the mandrel is drawn out to thereby obtain the main body.

Each joint 2 is in contact with the inner side of the sub-layer 1b, and has a joint surface 2a that is somewhat shorter than the associated sub-layer 1b. The outer diameter of that section of the joint where the joint surface 2a is formed is slightly larger than the inner diameter of the main body 1 before press fitting. Thus, when the joint 2 is forced into the main body 1, a compressive stress is applied to the joint surface 2a of the joint, and a circumferential tensile stress is applied to the main body. Due to the compressive stress and the tensile stress, the main body 1 and the joint 2 are firmly joined together. At each end of the main body 1, the sub-layer 1b exists internally, and the main layer 1a on the outer side, so that the circumferential tensile strength generated in the main body 1 as a result of the press fitting is mainly borne by the sub-layer 1b. The distortion of the main body 1 is largest on the inner periphery and diminishes toward the outer periphery. However, due to the hooped reinforcing fibers, the sub-layer, which is situated internally of the main layer 1a has a relatively large tensile rupture ductility, while the main layer 1a has a relatively small rupture ductility, with the result that an effective joint condition is realized.

The larger the difference between the outer diameter of that section of the joint 2 where the joint surface 2a is formed and the inner diameter of the main body 1 before junction, i.e., the press fitting margin, the larger the joining force to be obtained, and the more improved the torsional strength. Thus, the larger this difference, the more convenient it is from the viewpoint of the transmission of torque. The joining force, however, also varies with the area, surface condition, etc. of the joint surface 2a. Usually, the ratio of the press fitting margin to the inner diameter of the main body 1 is determined within the range of 0.001~0.02, and the length of the joint surface 2a as measured along the axial direction of the main body 1 is set to be not smaller than 1/10 of the inner diameter of the main body 1. Further, as shown in Fig. 2, it would be there is provided a serration 2e extending along the axial dimension of the joint. Apart from this, it would also be expedient to enhance the joining force, facilitate the press fitting through improvement of slip, fill the gap between the joint surface 2a and the inner surface of the sub-layer 1b, or apply adhesive to the joint surface 2a for the purpose of protecting the joint surface 2a from the atmospheric air.

The above-mentioned joint 2 includes a ring-like protrusion 2b whose outer diameter is somewhat larger than the inner diameter of the main body 1, and a slope 2c descending from this protrusion 2b toward the joint surface 2a. The protrusion 2b and the slope 2c constitute a compressive load transmitting section which concentrates a compressive load acting in the axial direction of the joint 2 on the interface between the main layer 1a and the sub-layer 1b to thereby separate the main layer 1a and the sub-layer 1b from each other. It is desirable for the angle which the slope 2c makes with the main body 1 to be in the range of 15~45°.

When an axial compressive load is applied to the propeller shaft described above, the joint 2 is pressed against the main body 1 to thereby forcibly enlarge the main body 1 under the action of the slope 2c of the protrusion 2b, thereby generating a circumferential tensile strain. Then, while the sub-layer 1b, which is situated internally, remains unbroken due to its high tensile rupture ductility, the main layer 1a, which is situated externally, suffers rupture due to its relatively low tensile rupture ductility. This rupture causes inter-layer exfoliation between the main layer 1a and the sub-layer 1b. That is, the main layer 1a and the sub-layer 1b are separated from each other. From this stage onward, the rupture proceeds rapidly. However, the sub-layer 1b, which is joined to the joint 2, does not suffer rupture but moves axially through the main body 1 while destroying the main layer 1a with the joint 2 as it moves along.

In this way, the axial energy is absorbed through the rupture of the main layer 1a. The initial rupture of the main body 1 is induced by the slope 2c of the joint 2, and the protrusion 2b forcibly enlarges the main layer 1a. In view of this, it is desirable for the angle which the slope 2c makes with respect to the axial dimension of the main body 1 to be in the range of 15~45°, as stated above.

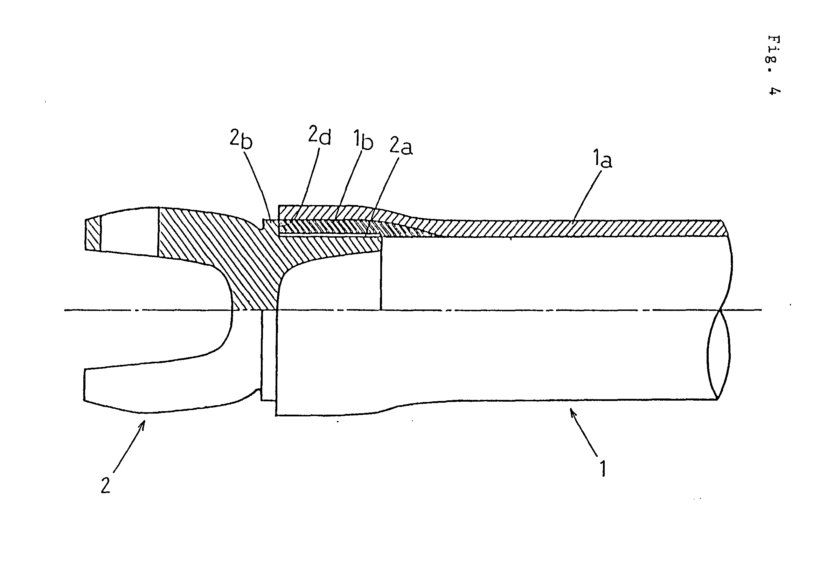

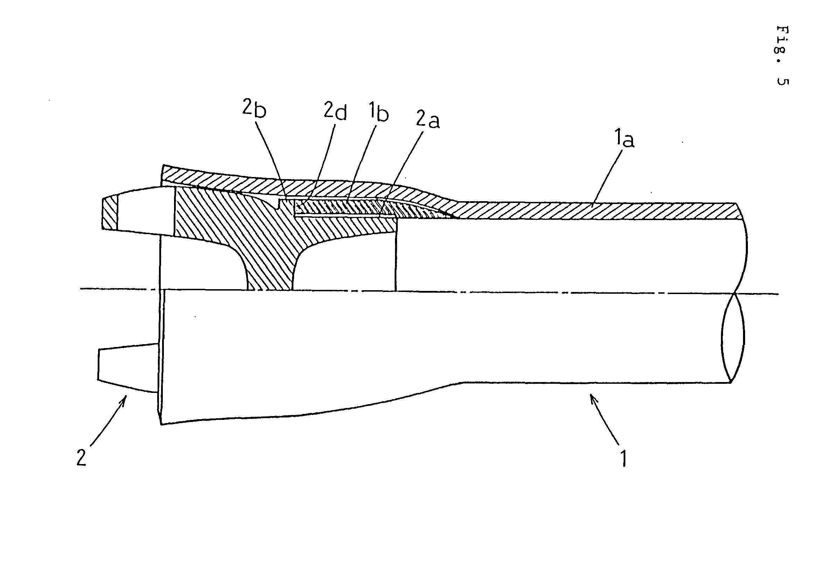

Fig. 4 shows a propeller shaft according to another embodiment of this invention. In this embodiment, what corresponds to the slope 2c of the ring-like protrusion 2b, shown in Fig. 1, provides an erect surface 2d that is opposed to the outer axial end surface of the sub-layer 1b. The outer diameter of the protrusion 2b is equal to that of the sub-layer 1b. In this propeller shaft, in which the protrusion 2b and the erect surface 2d constitute the compressive load transmitting section, a compressive load acting in the axial direction is transmitted to the sub-layer 1b from the erect surface 2d, which is opposed thereto, and further transmitted to the main layer 1a. Therefore, although the main layer 1a undergoes compressive deformation, a shearing stress which would destroy the interface between the two layers acts on this interface due to the large difference in Poisson's ratio between the main layer 1a and the sub-layer 1b. This stress, with the shearing stress generated between the layers by the compressive load and the tensile stress generated by the press fitting of the joint 2, generates a two-directional stress condition, under which the interface ruptures, and, from this stage onward, the rupture of the main layer 1a proceeds as shown in Fig. 5. However, this embodiment differs from the above-described one in that it is the sub-layer 1b that moves while forcibly enlarging the main layer 1a, and the protrusion 2b does not contribute to this forcible enlargement. The same effect is to be achieved by making the outer diameter of the protrusion 2b smaller than that of the sub-layer 1b. The erect surface 2d may or may not abut the outer axial end surface of the sub-layer 1b.

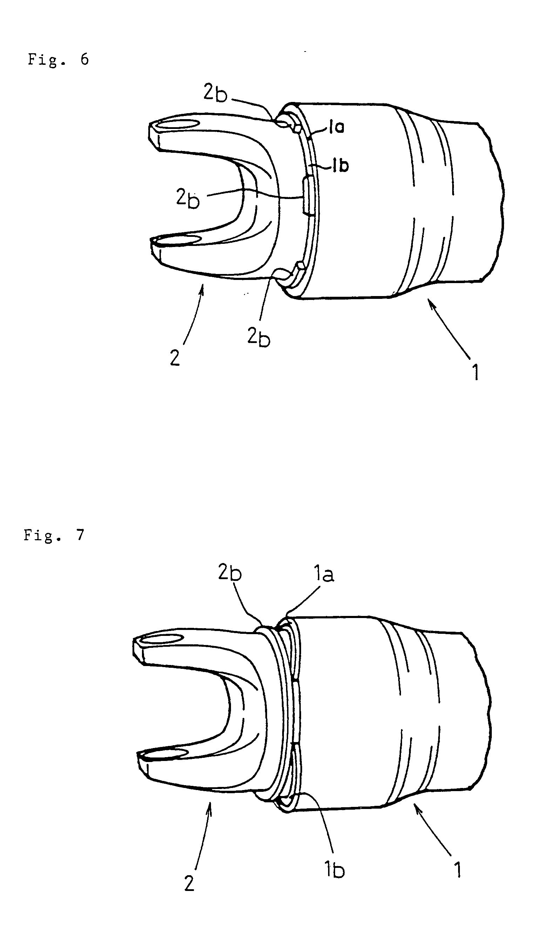

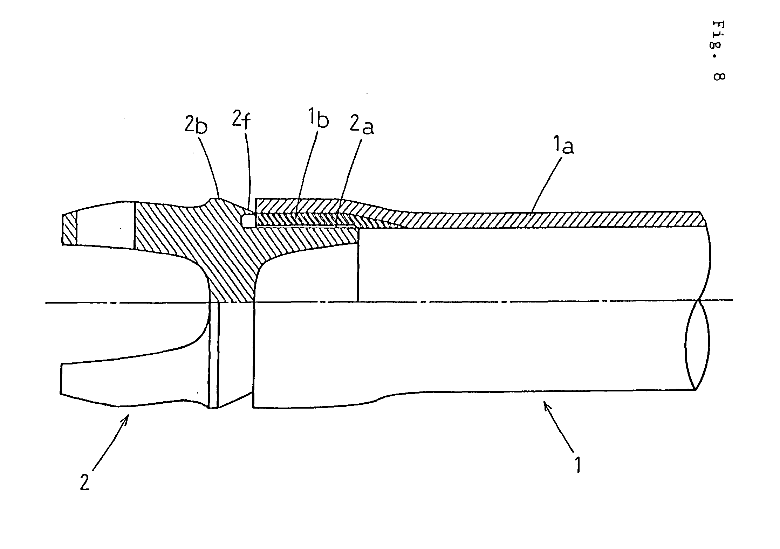

In the embodiment shown in Figs. 4 and 5, it is also possible, as shown in Fig. 6, for the protrusion 2b to consist of a plurality of protrusions arranged circumferentially on the joint 2 to form a ring-like configuration as a whole. Furthermore, as shown in Fig. 7, it is also possible to partially bevel the outer end surface of the main body, opposed to the protrusion 2b. This localizes the stress that is applied to the sub-layer 1b when the axial compressive load is applied to the joint 2 in the axial direction thereof. Furthermore, the shearing stress acting on the interface between the main layer 1a and the sub-layer 1b is also localized, with the result that the inter-layer exfoliation or rupture is brought about and caused to proceed more reliably. Further, this leads to an increase in the degree of freedom with respect to the starting load for causing the exfoliation or rupture.

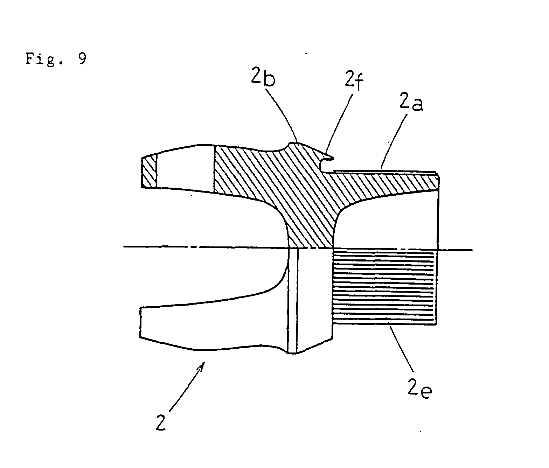

Figs. 8 and 9 show a propeller shaft according to still another embodiment of this invention. In this embodiment, the main body 1 is formed as a component that is perfectly identical with that of the above-described embodiments, whereas the construction of the compressive load transmitting section of the joint 2 differs from those in the above embodiments.

The joint 2 has a ring-like protrusion 2b situated adjacent to the joint surface 2a and having an outer diameter that is somewhat larger than the inner diameter of the main body 1. Formed on this ring-like protrusion 2b is a likewise ring-shaped wedge 2f, the tip of which is opposed to the interface between the main layer 1a and the sub-layer 1b. The protrusion 2b and the wedge 2f constitute a wedge means, which causes a compressive load acting in the axial direction of the joint 2 to be applied to the interface between the main layer 1a and the sub-layer 1b, thereby separating the main layer 1a and the sub-layer 1b from each other at this interface. Instead of providing a ring-shaped wedge, it is also possible to provide a plurality of wedges arranged at equal intervals along the interface between the layers. The wedge may be a single or double-faced one. However, as shown in Figs. 8 and 9, the single-faced structure, in which the face provides an external periphery, is the more preferable. Further, it is desirable for the face to make an angle ranging from 15 to 45° with respect to the axial dimension of the main body 1.

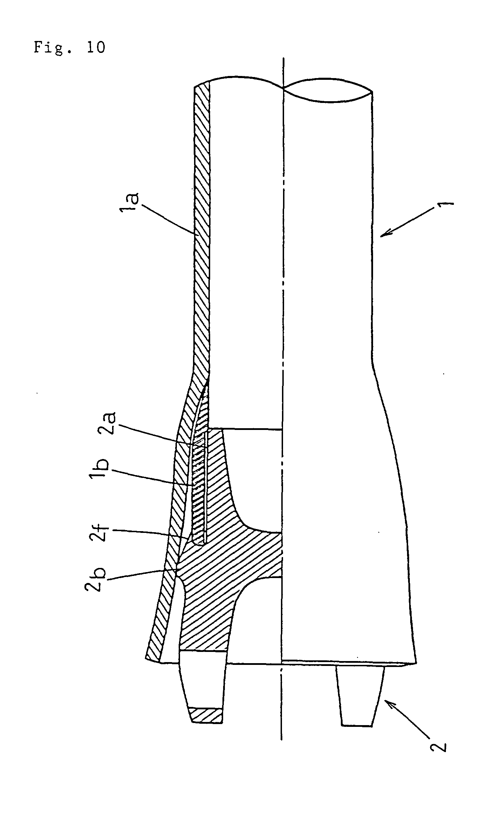

When an axial compressive load is applied to the propeller shaft described above, the joint 2 is pressed against the main body 1 as shown in Fig. 10, and the wedge 2f is forced into the interface between the main layer 1a and the sub-layer 1b. When the wedge 2f has been forced into the interface between the main layer 1a and the sub-layer 1b, a circumferential tensile strain is generated in the main layer 1a by its wedge effect. Since the tensile rupture ductility of the main layer 1a is lower than that of the sub-layer 1b, only the main layer 1a suffers rupture, and inter-layer exfoliation occurs between the main layer 1a and the sub-layer 1b. That is, the main layer 1a and the sub-layer 1b are separated from each other. Once this condition has been attained, the rupture of the main layer 1a proceeds rapidly. However, the sub-layer 1b, which is joined to the joint 2, does not rupture but moves axially through the main body 1 while destroying the main layer 1a with the joint 2 as it moves along.

In this way, the axial energy is absorbed through rupture of the main layer 1a. The initial rupture of the main body 1 is induced by the wedge 2f of the joint 2, and the protrusion 2b enlarges the main layer 1a. In view of this, it is desirable for the angle which the wedge 2f makes with the axial direction of the main body 1 to be in the range of 15~45°.

In the above-described embodiments, the main body is symmetrical about the midpoint with respect to the length dimension thereof. However, this should not be construed restrictively. For, as will be described below, it is not always necessary for the rupture of the main body to proceed simultaneously from both ends thereof. Though it depends on the method of joining the joint, etc., it is possible to adopt a construction in which one of the ends has no sub-layer.

Furthermore, the joints described above have a serration in the joint section. Such a joint can be joined to the main body more firmly, which is advantageous from the viewpoint of the transmission of torsional torque.

Furthermore, although joint is joined by press fitting, it is also possible to adopt a junction method in which press fitting is combined with an adhesive.

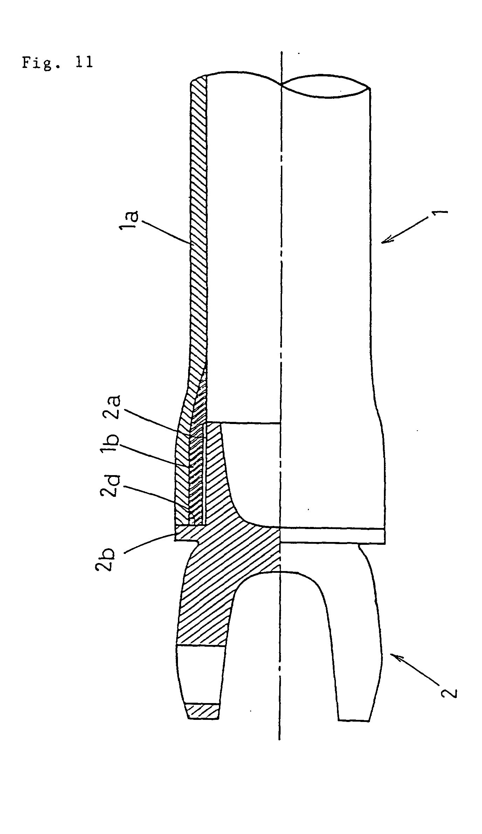

In the above-described propeller shafts, the joint that is joined to one end of the main body is the same as that joined to the other end thereof. That is, these propeller shafts are symmetrical about the midpoint with respect to the length dimension. Although this is advantageous in that the number of kinds of parts is relatively small, it is also possible to provide a joint having no compressive load transmitting section at the other end of the main body since it is not absolutely necessary for the rupture of the main body to proceed simultaneously from both ends thereof. Furthermore, as shown in Fig. 11, the joint at the other end of the main body may be formed such that, though of a configuration similar to that shown in Fig. 4 when seen as a whole, it has a protrusion 2b the outer diameter of which is not smaller than that of the main body 1, and an erect surface 2d formed thereby and facing the outer end surfaces of both the main layer 1a and the sub-layer 1b. In this case, the erect surface 2d functions as a stopper at the time of press fitting, and, further, as a seating for receiving a compressive load applied to the main body. In some cases, no joint may be joined to the other end of the main body, with a flange or the like for mounting a joint being joined thereto instead.

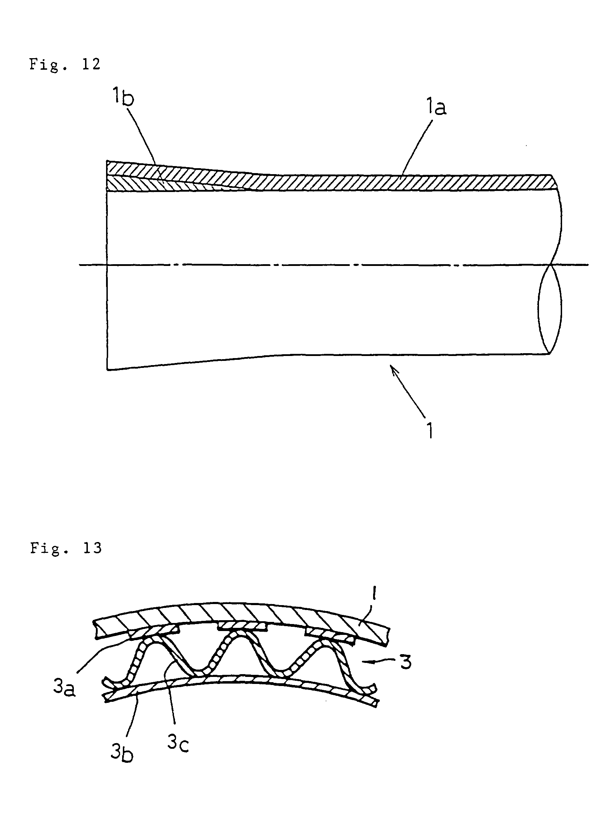

When considered from the viewpoint of the progress of rupture in the main body described above, it is desirable for the sub-layer 1b to be formed such that its inner end portion, which is opposite to the outer end portion, has a wedge-shaped longitudinal-sectional configuration as shown in Fig. 1, etc. Furthermore, as shown in Fig. 12, it is also desirable for the thickness of the sub-layer to be gradually diminished from the axially outer end surface toward the axially inner end surface thereof.

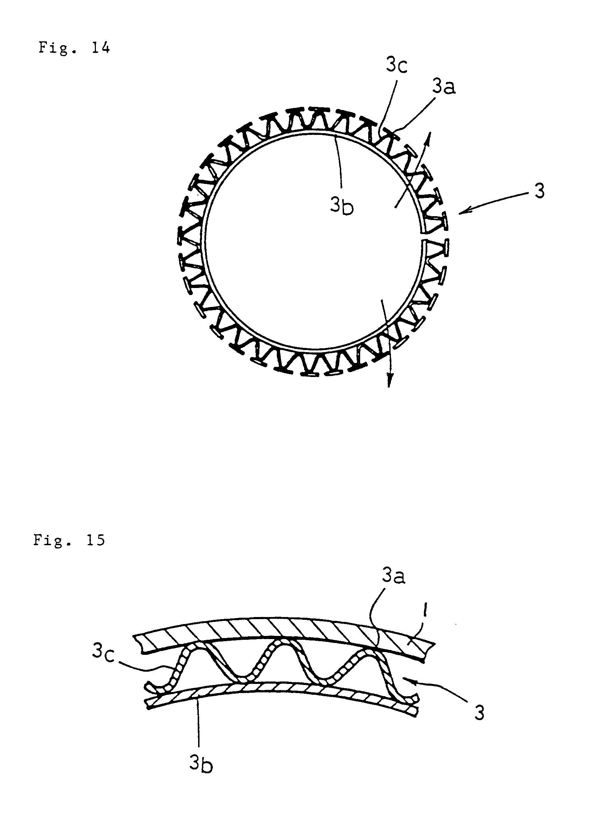

Furthermore, to restrain vibrations, noise, etc. in use over a wide frequency range, it is desirable to provide a built-in damper inside the main body. Fig. 13 shows an example of such a damper. The damper 3, which is formed of thick paper, plastic film, non woven fabric of synthetic fiber or the like, comprises a plurality of frictional engagement sections 3a arranged along the inner peripheral surface of the main body 1, a cylindrical holding section 3b spaced apart from the inner peripheral surface of the main body 1, and an elastic support section 3c of a corrugated type which resiliently supports the frictional engagement sections 3a by pressing them against the inner peripheral surface of the main body 1. As shown in Fig. 14, when seen as a whole, the damper is formed as a cylindrical body having a tendency to expand in the directions indicated by the arrows. The damper is incorporated into the main body such that the frictional engagement sections 3a are held slidable on and pressed against the inner peripheral surface of the main body 1 by the elastic support section 3c. Fig. 15 shows another example of the damper. In this damper 3, the apex sections of the corrugated-type elastic support section 3c also function as the frictional engagement sections 3a in the damper shown in Figs. 13 and 14.

### Example 1

The main body was formed by the filament winding method. That is, six bundles of carbon fibers (average single fiber diameter: 7mµ, number of single fibers: 12,000, tensile strength: 360 kgf/mm2 (1 KgF = 9,81 N), tensile elastic modulus: 23,500 kgf/mm2) were properly arranged and impregnated with bisphenol-A-type epoxy resin containing curing agent and curing accelerator, and, in so doing, the bundles were wound on a mandrel having an outer diameter of 70 mm and a length of 1,300 mm. Firstly, eight layers were wound on one end section of a length of 100 mm so as to be at an angle of ±80° with respect to the axial dimension to thereby form a sub-layer having a thickness of 2.5 mm. After this, the procedure moved to the other end to form a similar sub-layer on the other end section, and then four layers were wound over the entire length of the mandrel at an angle of ± 15° with respect to the axial dimension to thereby form a main layer having a thickness of 2.5 mm. Further, one layer was hooped over the entire length of the mandrel at an angle of -80° with respect to the axial dimension.

Next, epoxy resin was heated at a temperature of 180°C for 6 hours to thereby cure the epoxy resin while rotating the mandrel. Then, the mandrel is drawn out, and each end portion of an extension of 50 mm was cut off and removed, whereby a main body 1 as shown in Fig. 1 was obtained, which had an end-portion outer diameter of 80 mm, a sub-layer outer diameter of 75 mm, an inner diameter of 70 mm, and a length of 1,200 mm.

Next, a metal joint 2 as shown in Fig. 2, whose joint surface 2a had a serration, an outer diameter of 70.5 mm, and a length of 40 mm, whose protrusion 2b had an outer diameter of 80 mm, and whose slope 2c made an angle of 30° with respect to the axial dimension of the main body 1, was joined to each end of the above main body 1 by press fitting to thereby obtain a propeller shaft according to this invention'as shown in Fig. 1. The requisite force for the press fitting was 7,000 kgf.

Subsequently, the propeller shaft was subjected to a torsion test. The torsional strength of the propeller shaft was found to be 350 kgf.m, and the critical revolution 8,000 rpm, both of which proved sufficient as a propeller shaft for automobiles.

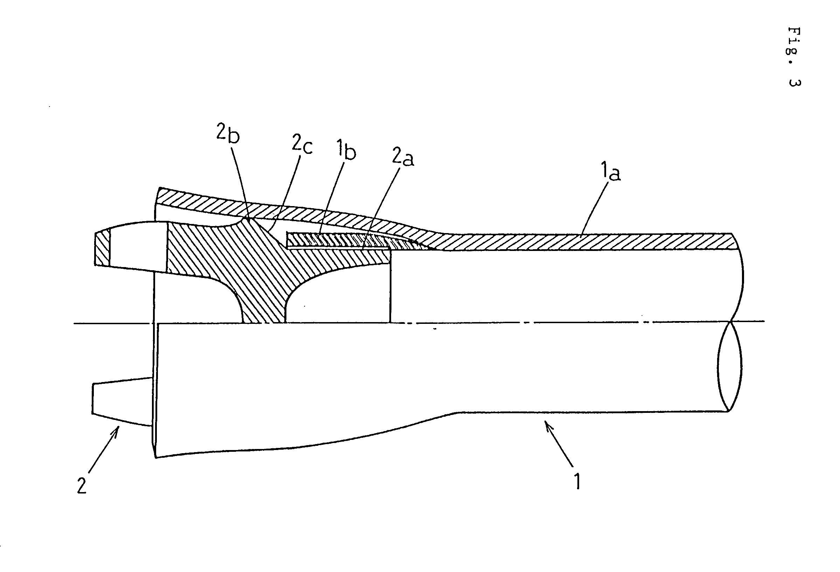

When an axial compressive load was applied to the propeller shaft, the main layer and the sub-layer were separated from each other at 10,000 kgf to thereby start rupture of the main layer. After the rupture, sequential rupture as shown in Fig. 3 took place at a load of 3,000 kgf.

### Example 2

A propeller shaft as shown in Fig. 4 was obtained in the same manner as in Example 1 except that a joint was used the protrusion 2b of which had an outer diameter of 75 mm, which was the same as that of the sub-layer 1b.

In a torsion test, the propeller shaft was found to have a torsional strength of 350 kgf.m and a critical revolution of 8,000 rpm, both of which proved satisfactory for a propeller shaft for automobiles.

Next, when an axial compressive load was applied, the main layer and the sub-layer were separated from each other at 11,000 kgf, and the rupture of the main layer started. After the rupture, sequential breakage proceeded at a load of 3,500 kgf as shown in Fig. 6.

### Example 3

A metal joint 2 as shown in Fig. 9, which had a serration on the joint surface, whose joint surface 2a had an outer diameter of 70.5 mm and an length of 40 mm, whose protrusion 2b had an outer diameter of 80 mm, and whose wedge 2f made an angle of 30° with respect to the axial dimension of the main body 1, was joined to each end of the main body 1 by press fitting, thereby obtaining a propeller shaft according to this invention as shown in Fig. 8. The requisite force for the press fitting was 7,000 kgf.

In a torsion test, the above propeller shaft was found to have a torsional strength of 350 kgf.m and a critical revolution of 8,000 rpm, both of which proved satisfactory for a propeller shaft for use in automobiles.

Next, when an axial compressive load was applied, the separation of the main layer and the sub-layer occurred at 10,000 kgf to start the rupture of the main layer. After the rupture, sequential breakage proceeded at a load of 3,000 kgf as shown in Fig. 10.

### Industrial Applicability

The propeller shaft of this invention is equipped with a compressive load transmitting section which concentrates a compressive load acting in the axial direction of the joint on the interface between the main layer and the sub-layer to thereby separate the main layer and the sub-layer from each other. Thus, as shown with reference to the embodiments, it is possible, at the time of collision, to allow the rupture of the propeller shaft to proceed reliably with the rupture of the car body while satisfying the fundamental requirements for the car, such as the torsional strength and the critical revolution, thereby enabling the energy absorbing effect due to the crashable body structure to be exerted to a sufficient degree.

## Claims

1. A propeller shaft comprising a cylindrical main body (1) made of fiber reinforced plastics (FRP)and a first joint (2) that is joined to an end of the main body (1), said main body (1) including a main layer (1a) extending over the entire length thereof and a sub-layer (1b) formed at said end of said main body (1) so as to be integral with and internally of said main layer (1a), wherein said first joint (2) is equipped with a compressive load transmitting section (2c, 2d, 2f) adapted to direct onto the shaft a compressive load axially acting in the axial direction of said joint (2) wherein the first joint comprises a serration (2c) on a joint surface (2a) between said first joint and said main body extending in an axial direction thereof, **characterised in that** the junction between said first joint made of metal and said sublayer is effected by press-fitting and **in that** said compression load transmitting section directs said compressive load to concentrate it onto the interface between said main layer (1a) and said sub-layer (1b) to thereby separate said main layer (1a) and said sub-layer (1b) from each other at said interface.

2. A propeller shaft according to Claim 1 wherein the propeller shaft further comprises a second joint (2) made of metal that is joined to the other end of the said main body (1), said main body (1) including a second sublayer (1b) formed at the said other end of said main body (1) so as to be integral with and internal of said main layer (1a), said second joint (2) being equipped with a compressive load transmitting section adapted to concentrate a compressive load axially acting in the axial direction of said second joint (2) on an interface between said main layer (1a) and said second sub-layer (1b) to thereby separate said main layer (1a) and said second sub-layer (1b) from each other at said interface therebetween wherein the second joint has a serration on a surface of said second joint extending in an axial direction thereof and wherein junction between said second joint and said sublayer is effected by press-fitting.

3. A propeller shaft according to Claim 1 or claim 2 wherein said main layer (1a) extending over the entire length of said main body (1) includes helically wound reinforcing fibers, and the or each respective sub-layer (1b) formed at the or each respective end of said main body (1) so as to be integral with and internal of said main layer (1a) includes hooped reinforcing fibers.

4. A propeller shaft according to Claim 3 wherein said reinforcing fibers are helically wound at an angle of ±5~30° with respect to the axial dimension of said main body (1).

5. A propeller shaft according to any one of Claims 1 to 4 wherein the or each joint includes a or a respective joint surface (2a) in contact with the inner periphery of the or the respective sub-layer (1b).

6. A propeller shaft according to any one of Claims 1 to 5 wherein the or each said compressive load transmitting section has a or a respective sloped portion (2c) descending towards a or a respective joint surface between the or each respective joint (2) and the or each respective sub-layer (1b).

7. A propeller shaft according to any one of Claims 1 to 5 wherein the or each compressive load transmitting section has a or a respective erect surface (2d) having an outer diameter not larger than the outer diameter of the or each respective sub-layer and opposed to an outer end surface of the or each respective sub-layer (1b).

8. A propeller shaft according to Claim 7 wherein the or each respective erect surface (2d) extends in a ring-like fashion around the circumference of the or each respective joint (2).

9. A propeller shaft according to Claim 8 wherein the surface of the or each end of said main body (1) is partially bevelled.

10. A propeller shaft according to Claim 7 wherein a plurality of the erect surfaces (2d) are arranged around the circumference of the or each joint (2).

11. A propeller shaft according to any one of Claims 1 to 5 wherein the or each compressive load transmitting section is equipped with wedge means (2f).

12. A propeller shaft according to Claim 11 wherein the or each wedge means has a ring-like wedge (2f) extending along a circular line that is defined by the or each respective interface between said main layer (1a) and the or each respective sub-layer (1b) at the or each end of said main body (1).

13. A propeller shaft according to Claim 11 wherein said wedge means has a plurality of wedges (2f) arranged along a circular line that is defined by the or each respective interface between said main layer (1a) and the or each respective sub-layer (1b) at the or each end of said main body (1).

14. A propeller shaft according to any one of Claims 1 to 13 wherein said main body (1) contains a damper (3).

## Patentansprüche

1. Antriebswelle, umfassend einen zylindrischen Hauptkörper (1) aus faserverstärktem Kunststoff (FRP) und ein erstes Gelenk (2), das an ein Ende des Hauptkörpers (1) angefügt ist, wobei der Hauptkörper (1) eine Hauptschicht (1a), die sich über seine gesamte Länge erstreckt, und eine Unterschicht (1b) umfasst, die so am genannten Ende des Hauptkörpers (1) ausgebildet ist, dass sie mit der Hauptschicht (1a) einstückig verbunden ist und innerhalb davon liegt, worin das erste Gelenk (2) über einen Druckbelastung übertragenden Abschnitt (2c, 2d, 2f) verfügt, der so ausgebildet ist, dass er auf die Welle eine Druckbelastung richtet, die in axialer Richtung des Gelenks (2) axial wirkt, und worin das erste Gelenk einen Sägezahneinschnitt (2c) auf einer Gelenksfläche (2a) zwischen dem ersten Gelenk und dem Hauptkörper aufweist, der sich in axialer Richtung davon erstreckt, **dadurch gekennzeichnet, dass** die Verbindung zwischen dem ersten Gelenk aus Metall und der Unterschicht durch Presspassung hergestellt ist und dass der Druckbelastung übertragende Abschnitt die Druckbelastung so lenkt, dass sie auf der Grenzfläche zwischen der Hauptschicht (1a) und der Unterschicht (1b) konzentriert wird, so dass der Hauptkörper (1a) und die Unterschicht (1b) dadurch an der Grenzfläche voneinander getrennt werden.

2. Antriebswelle nach Anspruch 1, worin die Antriebswelle weiters ein zweites Gelenk (2) aus Metall umfasst, das an das andere Ende des Hauptkörpers (1) angefügt ist, wobei der Hauptkörper (1) eine zweite Unterschicht (1b) umfasst, die am genannten anderen Ende des Hauptkörpers (1) so ausgebildet ist, dass sie mit der Hauptschicht (1a) einstückig verbunden ist und innerhalb davon liegt, wobei das zweite Gelenk (2) über einen Druckbelastung übertragenden Abschnitt verfügt, der so ausgebildet ist, dass er eine Druckbelastung, die axial in axialer Richtung des zweiten Gelenks (2) wirkt, auf eine Grenzfläche zwischen der Hauptschicht (1a) und der zweiten Unterschicht (1b) richtet, um dadurch die Hauptschicht (1a) und die zweite Unterschicht (1b) an der Grenzfläche dazwischen voneinander zu trennen, worin das zweite Gelenk einen Sägezahneinschnitt auf einer Oberfläche des zweiten Gelenks aufweist, der sich in axialer Richtung davon erstreckt, und worin Verbindung zwischen dem zweiten Gelenk und der Unterschicht durch Presspassung hergestellt ist.

3. Antriebswelle nach Anspruch 1 oder 2, worin die Hauptschicht (1a), die sich über die gesamte Länge des Hauptkörpers (1) erstreckt, spiralförmig gewundene Verstärkungsfasern enthält, und die oder jede jeweilige Unterschicht (1b), die an dem oder jedem jeweiligen Ende des Hauptkörpers (1) so ausgebildet ist, dass sie mit der Hauptschicht (1a) einstückig verbunden ist und innerhalb davon liegt, umschnürte Verstärkungsfasern umfasst.

4. Antriebswelle nach Anspruch 3, worin die Verstärkungsfasern spiralförmig in einem Winkel von ±5-30° in Bezug auf die axiale Richtung des Hauptkörpers (1) gewickelt sind.

5. Antriebswelle nach einem der Ansprüche 1 bis 4, worin das oder jedes Gelenk eine oder eine jeweilige Gelenksfläche (2a) umfasst, die mit dem Innenumfang der oder der jeweiligen Unterschicht (1b) in Kontakt steht.

6. Antriebswelle nach einem der Ansprüche 1 bis 5, worin der oder jeder Druckbelastung übertragende Abschnitt einen oder einen jeweiligen geneigten Abschnitt (2c) aufweist, der zu einer oder einer jeweiligen Gelenksfläche zwischen dem oder jedem jeweiligen Gelenk (2) und der oder jeder jeweiligen Unterschicht (1b) abfällt.

7. Antriebswelle nach einem der Ansprüche 1 bis 5, worin der oder jeder Druckbelastung übertragende Abschnitt eine oder eine jeweilige vorstehende Oberfläche (2d) aufweist, deren Außendurchmesser nicht größer als der Außendurchmesser der oder einer jeden jeweiligen Unterschicht ist und die einer Außenendfläche der oder einer jeden jeweiligen Unterschicht (1 b) gegenüber steht.

8. Antriebswelle nach Anspruch 7, worin sich die oder jede jeweilige aufrechte Oberfläche (2d) ringartig um den Umfang des oder eines jeden jeweiligen Gelenks (2) herum erstreckt.

9. Antriebswelle nach Anspruch 8, worin die Oberfläche des oder eines jeden Endes des Hauptkörpers (1) teilweise abgefast ist.

10. Antriebswelle nach Anspruch 7, worin eine Vielzahl der vorstehenden Oberflächen (2d) um den Umfang des oder eines jeden Gelenks (2) herum angeordnet ist.

11. Antriebswelle nach einem der Ansprüche 1 bis 5, worin der oder jeder Druckbelastung übertragende Abschnitt mit Keilmitteln (2f) ausgestattet ist.

12. Antriebswelle nach Anspruch 11, worin das oder jedes Keilmittel einen ringartigen Keil (2f) aufweist, der sich entlang einer kreisförmigen Linie erstreckt, die durch die oder jede jeweilige Grenzfläche zwischen der Hauptschicht (1a) und der oder jeder jeweiligen Unterschicht (1b) an dem oder jedem Ende des Hauptkörpers (1) definiert ist.

13. Antriebswelle nach Anspruch 11, worin das Keilmittel eine Vielzahl von Keilen (2f) aufweist, die entlang einer kreisförmigen Linie angeordnet sind, die durch die oder jede jeweilige Grenzfläche zwischen der Hauptschicht (1a) und der oder jeder jeweiligen Unterschicht (1b) an dem oder jedem Ende des Hauptkörpers (1) definiert ist.

14. Antriebswelle nach einem der Ansprüche 1 bis 13, worin der Hauptkörper (1) einen Dämpfer (3) umfasst.

## Revendications

1. Arbre de transmission comprenant un corps principal cylindrique (1) réalisé en plastique renforcé par des fibres (FRP) et un premier joint (2) qui est relié à une extrémité du corps principal (1), ledit corps principal (1) incluant une couche principale (1a) s'étendant sur toute sa longueur, et une sous-couche (1b) formée à ladite extrémité dudit corps principal (1) de façon à être intégrale avec et à l'intérieur de ladite couche principale (1a), où ledit premier joint (2) présente une section de transmission de charge de compression (2c, 2d, 2f) conçue pour diriger sur l'arbre une charge de compression agissant axialement dans la direction axiale dudit joint (2), où le premier joint comprend une denture (2c) sur une surface de joint (2a) entre ledit premier joint et ledit corps principal s'étendant dans une direction axiale de celui-ci, **caractérisé en ce que** la jonction entre ledit premier joint réalisé en métal et ladite sous-couche est effectuée par ajustage serré, et **en ce que** ladite section de transmission de charge de compression dirige ladite charge de compression pour la concentrer sur l'interface entre ladite couche principale (1a) et ladite sous-couche (1b) pour séparer ainsi ladite couche principale (1a) et ladite sous-couche (1b) l'une de l'autre à ladite interface.

2. Arbre de transmission selon la revendication 1, où l'arbre de transmission comprend en outre un second joint (2) réalisé en métal qui est relié à l'autre extrémité dudit corps principal (1), ledit corps principal (1) incluant une seconde sous-couche (1b) formée à ladite autre extrémité dudit corps principal (1) de façon à être intégrale avec et à l'intérieur de ladite couche principale (1a), ledit second joint (2) étant équipé d'une section de transmission de charge de compression apte à concentrer une charge de compression agissant axialement dans la direction axiale dudit second joint (2) sur une interface entre ladite couche principale (1a) et ladite seconde sous-couche (1b) pour séparer ainsi ladite couche principale (1a) et ladite seconde sous-couche (1b) l'une de l'autre à ladite interface entre celles-ci, où le second joint présente une denture sur une surface dudit second joint s'étendant dans une direction axiale de celui-ci, et où la jonction entre ledit second joint et ladite sous-couche est effectuée par ajustage serré.

3. Arbre de transmission selon la revendication 1 ou la revendication 2, où ladite couche principale (1a) s'étendant sur toute la longueur dudit corps principal (1) comprend des fibres de renforcement enroulées hélicoïdalement, et la ou chaque sous-couche respective (1b) formée à la ou chaque extrémité respective dudit corps principal (1) de façon à être intégrale avec et à l'intérieur de ladite couche principale (1a) comprend des fibres de renforcement bouclées.

4. Arbre de transmission selon la revendication 3, où lesdites fibres de renforcement sont enroulées hélicoïdalement selon un angle de ±5 ~ 30° relativement à la direction axiale dudit corps principal (1).

5. Arbre de transmission selon l'une des revendications 1 à 4, où le ou chaque joint comprend une ou une surface de joint respective (2a) en contact avec la périphérie interne de la ou de la sous-couche respective (1b).

6. Arbre de transmission selon l'une des revendications 1 à 5, où la ou chaque section de transmission de charge de compression présente une ou une portion inclinée respective (2c) descendant vers une ou une surface de joint respective entre le ou chaque joint respectif (2) et la ou chaque sous-couche respective (1b).

7. Arbre de transmission selon l'une des revendications 1 à 5, où la ou chaque section de transmission de charge de compression présente une ou une surface d'érection respective (2d) d'un diamètre extérieur qui n'est pas plus grand que le diamètre extérieur de la ou chaque sous-couche respective et opposée à une surface d'extrémité extérieure de la ou de chaque sous-couche respective (1b).

8. Arbre de transmission selon la revendication 7, où la ou chaque surface d'érection respective (2d) s'étend d'une manière annulaire autour de la circonférence du ou de chaque joint respectif (2).

9. Arbre de transmission selon la revendication 8, dans lequel la surface de la ou de chaque extrémité dudit corps principal (1) est partiellement biseautée.

10. Arbre de transmission selon la revendication 7, où une pluralité des surfaces d'érection (2d) est agencée autour de la circonférence de la ou de chaque joint (2).

11. Arbre de transmission selon l'une des revendications 1 à 5, où la ou chaque section de transmission de charge de compression est équipée d'un moyen de coin (2f).

12. Arbre de transmission selon la revendication 11, où le ou chaque moyen de coin présente un coin annulaire (2f) s'étendant le long d'une ligne circulaire qui est définie par la ou chaque interface respective entre ladite couche principale (1a) et la ou chaque sous-couche respective (1b) à la ou chaque extrémité dudit corps principal (1).

13. Arbre de transmission selon la revendication 11, où ledit moyen de coin présente une pluralité de coins (2f) agencés le long d'une ligne circulaire qui est définie par la ou chaque interface respective entre ladite couche principale (1a) et la ou chaque sous-couche respective (1b) à la ou chaque extrémité dudit corps principal (1).

14. Arbre de transmission selon l'une des revendications 1 à 13, où ledit corps principal (1) contient un amortisseur (3).
